# EUROPEAN PATENT SPECIFICATION

(11) **EP 4 609 342 B1**
(45) Date of publication and mention of the grant of the patent: **11.03.2026**
(21) Application number: 24828125.5
(22) Date of filing: 12.12.2024
(51) Int. Cl.: G06Q 20/38, G06Q 20/40

(54) **PAYMENT PLATFORM COMPUTER SYSTEMS, AND COMPUTER-IMPLEMENTED METHODS OF RESPONDING TO A PAYMENT REQUEST**
COMPUTERSYSTEME FÜR ZAHLUNGSPLATTFORM UND COMPUTERIMPLEMENTIERTE VERFAHREN ZUR REAKTION AUF EINE ZAHLUNGSANFRAGE
SYSTÈMES INFORMATIQUES DE PLATEFORME DE PAIEMENT ET PROCÉDÉS MIS EN OEUVRE PAR ORDINATEUR DE RÉPONSE À UNE DEMANDE DE PAIEMENT

(30) Priority: 14.12.2023 GB 202319142
(43) Date of publication of application: 03.09.2025
(73) Proprietor: Skyscanner Technology Limited, London W1D 4AL (GB)
(72) Inventor: STEWART, James, London W1D 4AL (GB); HRISTOV, Ivaylo, London W1D 4AL (GB); WATSON, Harley, London W1D 4AL (GB); NTASIOUDIS, Antonios, London W1D 4AL (GB); RAMON, Sebastia, London W1D 4AL (GB); LOPEZ, David, London W1D 4AL (GB); ABDELRAHMAN, Khaled, London W1D 4AL (GB); MYALL, Pete, London W1D 4AL (GB); NICKEL, Leo, London W1D 4AL (GB); KARPOVICH, Igor, London W1D 4AL (GB); STEWART, Ben, London W1D 4AL (GB)
(74) Representative: Langley, Peter James
(86) International application number: PCT/GB2024/053081
(87) International publication number: WO 2025/125795

(56) References cited:
- US-A1- 2012 030 066
- US-A1- 2015 066 765
- US-A1- 2017 372 275
- US-A1- 2018 060 861

## Description

### BACKGROUND OF THE INVENTION

### 1. Field of the Invention

The field of the invention relates to computer-implemented methods of responding to a payment request, and to related payment platform computer systems.

### 2. Technical Background

When paying for goods or services over a communication network, payment details need to be supplied by the payer, and there is a risk that when providing payment details, these can be obtained at the time, or at a later time for example from a data store, by an unauthorized party, which can lead to the payer becoming a victim of fraud. There is a need to reduce the risk of fraud happening as a result of paying for goods or services over a communication network.

### 3. Discussion of Related Art

EP3038034A1 and EP3038034B1 disclose a method for conducting a transaction that includes receiving a pseudo account identifier that corresponds to a primary account identifier. The pseudo account identifier may be received at a portable wireless device and may be generated by a remote server computer. The portable wireless device can receive the pseudo account identifier over a first network and provide the pseudo account identifier to an access device. The access devices generally comprises a reader that can receive the pseudo account identifier, and thereafter send a message to request authorization of a transaction. The authorization request message may include the pseudo account identifier and is sent to a payment processing network. The authorization request message is sent to the payment processing network over a second network. The payment processing network may then process the authorization message and return a response that indicates if the transaction is authorized or not.

US20150066765A1 discloses a payment apparatus and method.

### SUMMARY OF THE INVENTION

According to a first aspect of the invention, there is provided a computer-implemented method of responding to a payment request, the method including the steps of:
(i) a vendor server receiving a request from a user terminal to purchase goods or services for a transaction amount;
(ii) the vendor server requesting, in a transaction request including the transaction amount, a first reference code from a payment provider server, and the vendor server receiving the first reference code from the payment provider server, wherein the payment provider server stores the transaction amount in association with the first reference code;
(iii) the vendor server sending transaction data including the transaction amount and the first reference code to a vendor payments computer system;
(iv) the vendor payments computer system generating a second reference code uniquely associated with the first reference code, and sending the second reference code to a vendor secure server;
(v) the vendor secure server providing an interface to the user terminal in which payment details are receivable from the user terminal;
(vi) the vendor secure server receiving, via the interface, the payment details from the user terminal, in which the payment details are not accessible from any computer system in connection with the vendor secure server, except from the payment provider server;
(vii) the vendor secure server forwarding the received payment details from the user terminal to the payment provider server, and the vendor secure server sending the second reference code to the payment provider server;
(viii) the payment provider server generating a third reference code from the received second reference code, the payment provider server checking that the third reference code is the same as the first reference code, to check that the transaction is genuine;
(ix) in response to determining that the third reference code is the same as the first reference code, the payment provider server processing the payment request, including the received payment details and including the transaction amount, to determine if the payment request is accepted;
(x) in response to determining that the payment request is accepted, the payment provider server sending confirmation of acceptance of the payment request to the vendor payments computer system, or in response to determining that the payment request is refused, the payment provider server sending refusal of acceptance of the payment request to the vendor payments computer system.

An advantage is that payment details are protected from being obtained by unauthorized parties. An advantage is that through the use of the first reference code, the second reference code and the third reference code, fraudulent impersonation of the vendor to the payment provider server is prevented.

The method may be one in which the vendor payments computer system stores the confirmation of acceptance of the payment request, or in which the vendor payments computer system stores the refusal of acceptance of the payment request.

The method may be one in which the first reference code is a first reference number, the second reference code is a second reference number, and the third reference code is a third reference number.

The method may be one wherein the payment details are payment card details. An advantage is that payment card details are protected from being obtained by unauthorized parties.

The method may be one in which the payment card details include customer name, credit card number, credit card expiration date.

The method may be one in which in step (ix), the transaction amount is identified using the first reference code. An advantage is that the transaction amount does not need to be sent to the payment provider server again.

The method may be one in which the goods or services are a flight booking, a hotel booking, or a vehicle rental booking.

The method may be one in which the vendor server hosts a travel website, the travel website providing multiple travel services (e.g. flight booking, hotel booking, vehicle rental booking). An advantage is that the same payment system can be used for multiple travel services.

The method may be one in which the vendor server provides a consistent payments service across travel services (e.g. flight booking, hotel booking, car rental booking), e.g. on a travel website.

The method may be one in which the vendor server provides ancillary purchases and/or ancillary platforms.

The method may be one in which the vendor secure server provides minimized exposure of payments data within the systems of the vendor, e.g. in a travel website e.g. during checkout and/or supply.

The method may be one in which the vendor secure server provides compliance with SCA/3DS(2) and possibly with full scope PCI DSS.

The method may be one in which frontends are built once per use case and components are reused across travel services (e.g. flight booking, hotel booking, car rental booking) and/or across platforms.

The method may be one in which all interactions from a frontend are done through a gateway service.

The method may be one in which no payment information leaks into the vendor's systems, e.g. a travel service's (e.g. flight booking, hotel booking, car rental booking) stack. An advantage is that payment details are protected from being obtained by unauthorized parties.

The method may be one in which the only piece of information that is passed within a stack is the second reference code or the payment stack's transaction id. An advantage is that payment details are protected from being obtained by unauthorized parties.

The method may be one in which when the user is using the user terminal to pay, there is just one vendor service to interact with which is the vendor secure server. An advantage is that payment details are protected from being obtained by unauthorized parties.

The method may be one in which the vendor secure server is not aware of travel service specifics e.g. partners, markets, flights, bookings, etc; but the vendor secure server can be aware of payment system specifics like payment currency or country the user terminal is in. An advantage is that payment details are protected from being obtained by unauthorized parties.

The method may be one in which the vendor secure server provides a payment form, e.g. to receive input payment instrument details from a user, or to receive selection of a saved payment instruments functionality from a user.

The method may be one in which the interface includes text boxes.

The method may be one in which data received via input into the interface (e.g. the text boxes) is not stored by the vendor secure server. An advantage is that payment details are protected from being obtained by unauthorized parties.

The method may be one in which data received via input into the interface (e.g. the text boxes) is not accessible to the vendor secure server. An advantage is that payment details are protected from being obtained by unauthorized parties.

The method may be one in which the transaction data includes travel transaction data (e.g. flight number, departure date, cost).

The method may be one in which the vendor secure server which provides the interface where the payment card details are entered is responsive only to the user who inputs the payment details, and cannot be accessed by personnel who operate the vendor secure server. An advantage is that payment details are protected from being obtained by unauthorized parties.

The method may be one in which the vendor secure server stores the second reference code.

The method may be one in which the vendor secure server stores the second reference code in a structured data format (e.g, JSON, XML).

The method may be one in which the vendor payments computer system stores the confirmation of acceptance of the payment request, and the vendor payments computer system stores the transaction data in association with the second reference code.

The method may be one in which the interface is a mobile device interface, e.g. smartphone interface.

The method may be one in which the interface is a mobile device interface in a mobile device app.

The method may be one in which the interface is a non-mobile device interface, e.g. desktop computer interface.

The method may be one in which the user terminal is a smartphone, a tablet computer, a laptop computer, a desktop computer or a smart TV.

The method may be one in which the vendor server provides an API Gateway which performs all of, or one of, or any combination of: Retrieve all payment methods; Retrieve details of a given payment method; Delete a given payment method; Update details of a given payment method; Create a new payment method.

The method may be one in which the API Gateway supports both web and mobile app frontends.

The method may be one in which the API Gateway returns a response body in JSON.

The method may be one in which the API Gateway is one in which all payments related operations for public facing services go through the API Gateway to internal backend services.

The method may be one in which the API Gateway is in charge of authorising incoming public requests and proxies the responses from the vendor payments computer system, for example from an abstraction for tokenisation and saved payment instruments management.

The method may be one in which the API Gateway includes a payment methods retrieval application programming interface (API). The method may be one in which the API Gateway is a BFF.

The method may be one in which the API Gateway is presented to web and app clients as an HTTP service using JSON.

The method may be one in which for internal calls the API Gateway is accessible via gRPC.

The method may be one in which all endpoints in the API Gateway are implemented using gRPC and Protobuf contracts.

The method may be one in which the endpoints are exposed as HTTP via the gRPC Gateway - a container which accepts JSON HTTP requests and converts them to gRPC requests for the API Gateway.

The method may be one in which clients are required to provide a traveller JSON Web Token (JWT) in some or all of their requests.

The method may be one in which when communicating with a mobile app, the JWT is part of a header.

The method may be one in which web clients provide the JWT through their cookie.

The method may be one in which JWT middleware is used for the purposes of verifying JWTs.

The method may be one in which the vendor secure server provides support for persistent and for one-time payment methods.

The method may be one in which the vendor payments computer system uses the second reference code as a unique payment ID for the transaction.

The method may be one in which authentication of the payment request includes use of 3DS2.

The method may be one in which payment fraud information is stored.

The method may be one in which payment messages are expired by removing items from a storage layer in the vendor payments computer system after converted or abandoned payment.

The method may be one in which the goods or services include a plurality of goods or services.

The method may be one in which the plurality of goods or services include ancillaries in addition to a flight or hotel booking.

The method may be one in which payment details include use of a 3DS2 service.

The method may be one in which the vendor payments computer system includes a storage layer which provides cross-geographic region storage replication.

The method may be one in which the vendor payments computer system includes a storage layer which limits the lifespan or lifetime of its transaction data.

The method may be one in which the vendor payments computer system includes a storage layer which uses JWT Token encryption.

The method may be one in which the vendor payments computer system includes a storage layer which uses KMS encryption.

The method may be one in which the vendor payments computer system includes a storage layer which uses Base64 Encoding.

The method may be one in which the vendor payments computer system includes a datastore which includes AWS ElastiCache (Redis) + Global replication which provides multi-geographic region functionality.

The method may be one in which the vendor payments computer system includes a datastore which includes AWS Dynamo DB + Global table which provides multi-geographic region functionality.

The method may be one in which the vendor payments computer system includes a datastore which includes Amazon Aurora multimaster, which does not provide multi-geographic region functionality.

The method may be one in which the vendor payments computer system includes a datastore which includes Amazon Aurora singlemaster + Global databases, which provides multi-geographic region functionality.

The method may be one in which the vendor payments computer system includes a datastore which includes Amazon RDS (Aurora MySQL) which provides multi-geographic region functionality.

The method may be one in which to cover for the case of region failures or gateway switches, the vendor payments computer system includes a payment-message-store which is configured to support write/read from all supported geographic regions, in which the system supports a booking process being initiated in one region and finalised in another region.

The method may be one in which the vendor payments computer system includes a database, the database including multiple rows for the same transaction, in which each row of the multiple rows includes data received in a write event for the second reference code, such that an update for a particular transaction cannot override data from a simultaneous update.

The method may be one in which the vendor payments computer system includes a storage layer.

The method may be one in which the storage layer uses DynamoDB.

The method may be one in which the storage layer implements TTL.

The method may be one in which the vendor secure server is included in a payment forwarding service, wherein the payment forwarding service informs the user terminal if the payment request is accepted or refused.

The method may be one in which the payment forwarding service performs mapping of payment information within a request body.

The method may be one in which the payment forwarding service receives a forwarding request from a partner server, inserts payment data using the second reference code and forwards the forwarding request via a further forwarding service.

The method may be one including using a payment forwarding service, including the steps of:
(a) A supply gateway supplying the second reference code;
(b) A connector preparing a request to the forwarding service with field substitution for payment information, including contacting a payment data store for the type of payment and a list of set fields;
(c) The forwarding service including payment information in the request and forwarding the request to a further forwarding service;
(d) the further forwarding service inserting PCI data in the request, and forwarding the request.

The method may be one in which all communications are encrypted.

According to a second aspect of the invention, there is provided a payment platform computer system including a vendor server, a vendor payments computer system, a vendor secure server and a payment provider server, in which:
(i) the vendor server is configured to receive a request from a user terminal to purchase goods or services for a transaction amount;
(ii) the vendor server is configured to request, in a transaction request including the transaction amount, a first reference code from the payment provider server, and the vendor server is configured to receive the first reference code from the payment provider server, wherein the payment provider server is configured to store the transaction amount in association with the first reference code;
(iii) the vendor server is configured to send transaction data including the transaction amount and the first reference code to the vendor payments computer system;
(iv) the vendor payments computer system is configured to generate a second reference code uniquely associated with the first reference code, and to send the second reference code to the vendor secure server;
(v) the vendor secure server is configured to provide an interface to the user terminal in which payment details are receivable from the user terminal;
(vi) the vendor secure server is configured to receive, via the interface, the payment details from the user terminal, in which the payment details are not accessible from any computer system in connection with the vendor secure server, except from the payment provider server;
(vii) the vendor secure server is configured to forward the received payment details from the user terminal to the payment provider server, and the vendor secure server is configured to send the second reference code to the payment provider server;
(viii) the payment provider server is configured to generate a third reference code from the received second reference code, and the payment provider server is configured to check that the third reference code is the same as the first reference code, to check that the transaction is genuine;
(ix) the payment provider server is configured to, in response to determining that the third reference code is the same as the first reference code, process the payment request, including the received payment details and including the transaction amount, to determine if the payment request is accepted;
(x) the payment provider server is configured to, in response to determining that the payment request is accepted, send confirmation of acceptance of the payment request to the vendor payments computer system; and/or the payment provider server is configured to, in response to determining that the payment request is refused, send refusal of acceptance of the payment request to the vendor payments computer system.

An advantage is that payment details are protected from being obtained by unauthorized parties. An advantage is that through the use of the first reference code, the second reference code and the third reference code, fraudulent impersonation of the vendor to the payment provider server is prevented.

The system may be configured to perform a method of any aspect of the first aspect of the invention.

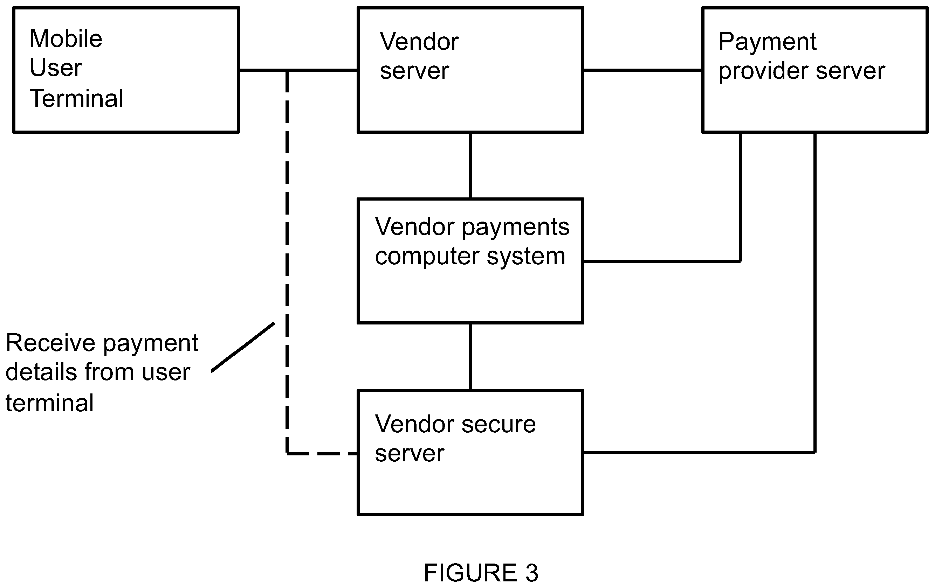

According to a third aspect of the invention, there is provided a payment platform computer system including a mobile device user terminal configured to execute an application, a vendor server, a vendor payments computer system, a vendor secure server and a payment provider server, in which:
(i) the vendor server is configured to receive a request from the application executing on the mobile device user terminal to purchase goods or services for a transaction amount;
(ii) the vendor server is configured to request, in a transaction request including the transaction amount, a first reference code from the payment provider server, and the vendor server is configured to receive the first reference code from the payment provider server, wherein the payment provider server is configured to store the transaction amount in association with the first reference code;
(iii) the vendor server is configured to send transaction data including the transaction amount and the first reference code to the vendor payments computer system;
(iv) the vendor payments computer system is configured to generate a second reference code uniquely associated with the first reference code, and to send the second reference code to the vendor secure server;
(v) the vendor secure server is configured to provide an interface to the mobile device user terminal in which payment details are receivable from the mobile device user terminal;
(vi) the vendor secure server is configured to receive, via the interface, the payment details from the application executing on the mobile device user terminal, in which the received payment details are not accessible from the vendor secure server by any computer system in connection with the vendor secure server, except from the payment provider server;
(vii) the vendor secure server is configured to forward the received payment details from the user terminal to the payment provider server, and the vendor secure server is configured to send the second reference code to the payment provider server;
(viii) the payment provider server is configured to generate a third reference code from the received second reference code, and the payment provider server is configured to check that the third reference code is the same as the first reference code, to check that the transaction is genuine;
(ix) the payment provider server is configured to, in response to determining that the third reference code is the same as the first reference code, process the payment request, including the received payment details and including the transaction amount, to determine if the payment request is accepted;
(x) the payment provider server is configured to, in response to determining that the payment request is accepted, send confirmation of acceptance of the payment request to the vendor payments computer system; and/or the payment provider server is configured to, in response to determining that the payment request is refused, send refusal of acceptance of the payment request to the vendor payments computer system. An example is shown in **Figure 3****.**

An advantage is that payment details are protected from being obtained by unauthorized parties. An advantage is that through the use of the first reference code, the second reference code and the third reference code, fraudulent impersonation of the vendor to the payment provider server is prevented.

The system may be configured to perform a method of any aspect of the first aspect of the invention.

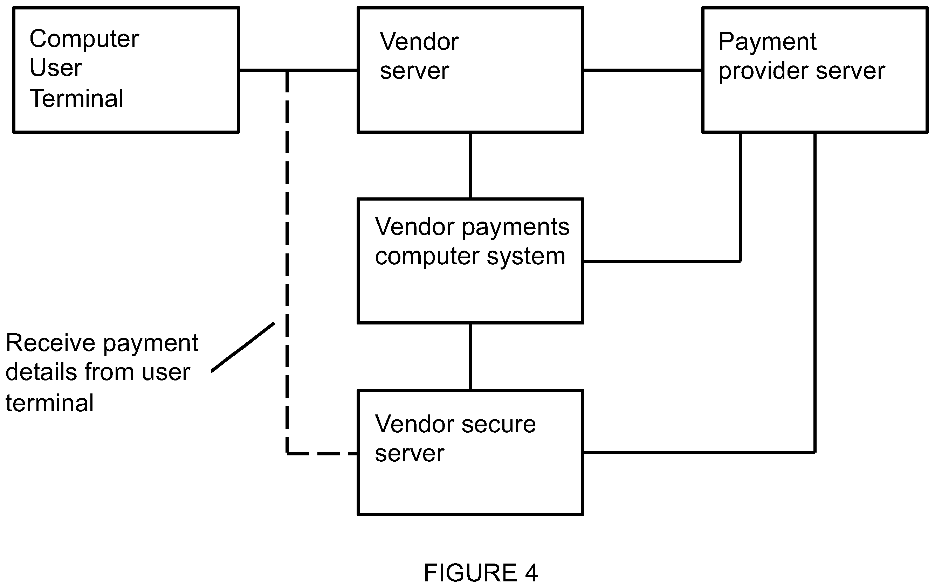

According to a fourth aspect of the invention, there is provided a payment platform computer system including a computer user terminal configured to execute an application, a vendor server, a vendor payments computer system, a vendor secure server and a payment provider server, in which:
(i) the vendor server is configured to receive a request from the application executing on the computer user terminal to purchase goods or services for a transaction amount;
(ii) the vendor server is configured to request, in a transaction request including the transaction amount, a first reference code from the payment provider server, and the vendor server is configured to receive the first reference code from the payment provider server, wherein the payment provider server is configured to store the transaction amount in association with the first reference code;
(iii) the vendor server is configured to send transaction data including the transaction amount and the first reference code to the vendor payments computer system;
(iv) the vendor payments computer system is configured to generate a second reference code uniquely associated with the first reference code, and to send the second reference code to the vendor secure server;
(v) the vendor secure server is configured to provide an interface to the computer user terminal in which payment details are receivable from the computer user terminal;
(vi) the vendor secure server is configured to receive, via the interface, the payment details from the application executing on the computer user terminal, in which the received payment details are not accessible from the vendor secure server by any computer system in connection with the vendor secure server, except from the payment provider server;
(vii) the vendor secure server is configured to forward the received payment details from the user terminal to the payment provider server, and the vendor secure server is configured to send the second reference code to the payment provider server;
(viii) the payment provider server is configured to generate a third reference code from the received second reference code, and the payment provider server is configured to check that the third reference code is the same as the first reference code, to check that the transaction is genuine;
(ix) the payment provider server is configured to, in response to determining that the third reference code is the same as the first reference code, process the payment request, including the received payment details and including the transaction amount, to determine if the payment request is accepted;
(x) the payment provider server is configured to, in response to determining that the payment request is accepted, send confirmation of acceptance of the payment request to the vendor payments computer system; and/or the payment provider server is configured to, in response to determining that the payment request is refused, send refusal of acceptance of the payment request to the vendor payments computer system. An example is shown in **Figure 4****.**

An advantage is that payment details are protected from being obtained by unauthorized parties. An advantage is that through the use of the first reference code, the second reference code and the third reference code, fraudulent impersonation of the vendor to the payment provider server is prevented.

The system may be configured to perform a method of any aspect of the first aspect of the invention.

Aspects of the invention may be combined.

### BRIEF DESCRIPTION OF THE FIGURES

Aspects of the invention will now be described, by way of example(s), with reference to the following Figures, in which:
**Figure 1** shows a schematic diagram of an example of a payment forwarding service.
**Figure 2** shows a schematic example of a user terminal in communication with a payment platform computer system, in which the payment platform computer system comprises a vendor server, a vendor payments computer system, a vendor secure server and a payment provider server.
**Figure 3** shows a schematic example of a payment platform computer system including mobile user terminal executing an application, a vendor server, a vendor payments computer system, a vendor secure server and a payment provider server.
**Figure 4** shows a schematic example of a payment platform computer system including computer user terminal executing an application, a vendor server, a vendor payments computer system, a vendor secure server and a payment provider server.

### DETAILED DESCRIPTION

In a previous payments system in a travel website, the travel website providing multiple travel services (e.g. flight booking, hotel booking, car rental booking), each travel service had its own payments system. Each payment system was developed and administered by a different team of people, which was inefficient.

A problem to solve is to provide a consistent payments service across travel services (e.g. flight booking, hotel booking, car rental booking), e.g. on a travel website, possibly including ancillary purchases and/or ancillary platforms. A further problem to solve is to provide minimized exposure of payments data within the systems of the travel website e.g. during checkout and/or supply. A further problem to solve is compliance with SCA/3DS(2) and possibly with full scope PCI DSS.

3DS2: 3D Secure is a multi-factor authentication protocol that helps to confirm a payer's identity during a transaction and acts as an additional layer of fraud prevention. This protocol is a major component of PCI compliance. SCA is the Strong Customer Authentication borne out of the PSD2 requirements. Each credit card or debit card transaction requires two of these three items: Something the customer has (e.g. smartphone, smart card, wearable device); Something the customer knows (e.g. password or PIN); Something the customer is (e.g. fingerprint, facial recognition, voice recognition). PSD2: The EU Payment Services Directive (PSD) is a set of regulatory rules focused around payments in the European region. Originally adopted in 2007, the first iteration of PSD aimed to better regulate payments in Europe. The second iteration of PSD, called PSD2, went into effect in 2016 with full compliance desired by 2018. The Payment Card Industry Data Security Standard (PCI DSS) is an information security standard used to handle credit cards from major card brands.

Solutions may include separating concerns: saved cards management, tokenisation, forwarding and payment form. Solutions may include that frontends are built once per usecase and components are reused across travel services (e.g. flight booking, hotel booking, car rental booking) and/or across platforms. Solutions may include that all interactions from a frontend are done through a gateway service. Solutions may include Changed Data Flow: no payment information leaks into a travel service's (e.g. flight booking, hotel booking, car rental booking) stack, the only piece of information that is passed within a stack may be the payment stack's transaction id. Solutions may include that when checking out, there is just one service to interact within the Payments Platform.

Solutions may include that the Payment Platform is not aware of travel service specifics e.g. partners, markets, flights, bookings, etc; but the Payment Platform can be aware of payment system specifics like currencies or countries.

In an example, a payment form is a component for an App, or a component for a Web input page, e.g. to input payment instrument details or to use a saved payment instruments functionality. In an example, a payment form backend provides configuration and orchestration of the payment form.

In a new payments system, tokenisation of input payment details may be performed. For example, when a customer fills in payment details, e.g. credit card details, into text boxes on our web page, our website doesn't receive these details. Instead, for example, the details in the text boxes on the web page are sent to a payment provider service, and are not received by our website, and we don't have access to this inputted data.

In the past, we would send payment details, e.g. customer name, credit card number, credit card expiration date, through our systems, including a reference number, to the payment service. This was provided for each service on our website, e.g. for purchasing flights, for purchasing hotel bookings, for purchasing car rental. If multiple products were being purchased, e.g. purchasing a flight, together with purchasing a hotel booking, together with purchasing a car rental, payment details were passed through each of these services. Each of these services is managed by at least one group of people, e.g. a development group of people, hence there was the potential for multiple development groups to have access to customer credit card details. There was a need to improve security of customer credit card details. In the past, towards the end of the customer interaction process, i.e. including the customer paying for the one or more purchases, the payment data would be sent to the payment provider.

Now, in an example, we request and receive a first reference number from the payments provider. Then we identify the relevant data, e.g. travel transaction data (e.g. flight number, departure date, cost) and send it together with the first reference number to our own separate payments system. We reference that transaction again by generating a second reference number from the first reference number, and then send that second reference number back to a system which provides the interface where card details are entered by the user and processed by our server, e.g. customer name, credit card number, credit card expiration date. Then our system sends to the payments provider a single piece of data which is the second reference number known to and stored at our server. This improves the security of customer credit card details. The system which provides the interface where the payment card details are entered is responsive only to the user who inputs the payment card details, and cannot be accessed by personnel who operate our server system. When the card details are to be entered, the second reference number is stored (e.g. in a payments details document) in a structured data format (e.g, JSON, XML) on our server. When the supply side on our web site makes a booking, the data associated with the booking is stored (e.g. in a booking document) in a structured data format (e.g, JSON, XML) on our systems. Then when the transaction is approaching completion, the server takes the stored data associated with the booking that is stored (e.g. in the booking document) in the structured data format, and associates this with the corresponding second reference number that has been stored (e.g. in the payments details document) in the structured data format, and then sends the corresponding second reference number to the payments provider, so the payments provider can collect payment details e.g. customer name, credit card number, credit card expiration date, through the text boxes it controls in our web page, so that the payment details e.g. customer name, credit card number, credit card expiration date, are passed from the customer to the payments provider without passing through our systems. The payments provider is able to generate the first reference number from the second reference number it receives, so the payments provider can identify the original request for the first transaction number, and confirm that the transaction is a genuine transaction and not an attempt at a fraudulent transaction. After the payments provider receives the payment details, and accepts the payment, a confirmation of payment is sent from the payments provider to our server, and confirmation of payment is stored at our server.

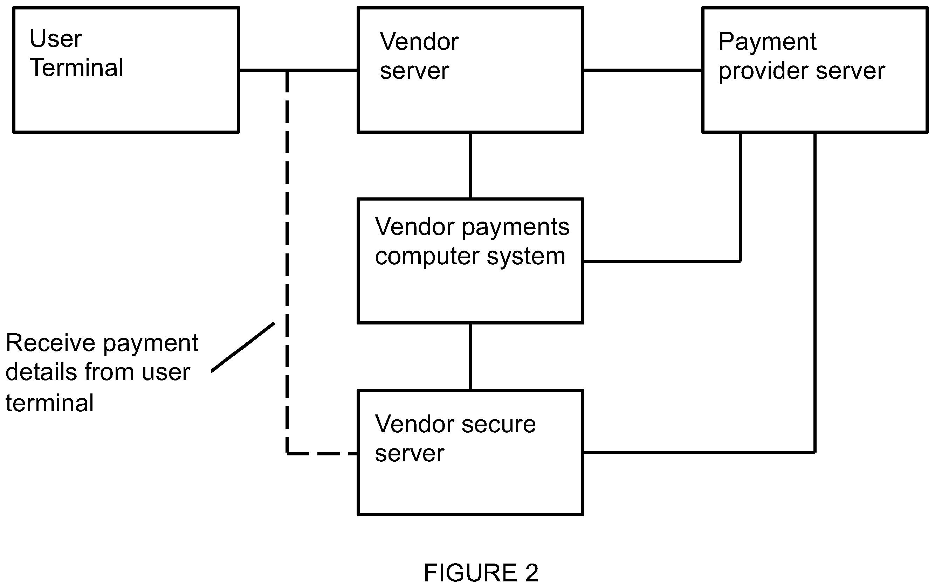

In an example, there is provided a computer-implemented method of responding to a payment request, the method including the steps of:
(i) a vendor server receiving a request from a user terminal to purchase goods or services for a transaction amount;
(ii) the vendor server requesting, in a transaction request including the transaction amount, a first reference code from a payment provider server, and the vendor server receiving the first reference code from the payment provider server, wherein the payment provider server stores the transaction amount in association with the first reference code;
(iii) the vendor server sending transaction data including the transaction amount and the first reference code to a vendor payments computer system;
(iv) the vendor payments computer system generating a second reference code uniquely associated with the first reference code, and sending the second reference code to a vendor secure server;
(v) the vendor secure server providing an interface to the user terminal in which payment details are receivable from the user terminal;
(vi) the vendor secure server receiving, via the interface, the payment details from the user terminal, in which the payment details are not accessible from any computer system in connection with the vendor secure server, except from the payment provider server;
(vii) the vendor secure server forwarding the received payment details from the user terminal to the payment provider server, and sending the second reference code to the payment provider server;
(viii) the payment provider server generating a third reference code from the received second reference code, the payment provider server checking that the third reference code is the same as the first reference code, to check that the transaction is genuine;
(ix) in response to determining that the third reference code is the same as the first reference code, the payment provider server processing the payment request, including the received payment details and including the transaction amount, to determine if the payment request is accepted;
(x) in response to determining that the payment request is accepted, the payment provider server sending confirmation of acceptance of the payment request to the vendor payments computer system, or in response to determining that the payment request is refused, the payment provider server sending refusal of acceptance of the payment request to the vendor payments computer system. A schematic example of a user terminal in communication with a computer system, in which the computer system is configured to implement an example of this method, is shown in **Figure 2****.**

Note that, in an example, the generation of the second reference code from the first reference code, and the generation of the third reference code from the second reference code, are performed using related computer-implemented methods, which have been established by cooperation between the vendor and the payment provider to prevent fraudulent impersonation of the vendor to the payment provider.

### Unified Payments Public-Facing Backend Service

We have built a purpose-built public facing payments service(s) that is abstract enough to meet the requirements of all our front ends (e.g. for flight booking, for hotel booking, for car rental booking) requiring payments-domain functionality. In an example, we consolidate the payment methods management into a single service, including a service for mobile devices, e.g. a service for a mobile device app.

In an example, an API Gateway is provided which may perform all of, or one of, or any combination of: Retrieve all payment methods; Retrieve details of a given payment method; Delete a given payment method; Update details of a given payment method; Create a new payment method. The API Gateway may support both web and mobile app frontends. The API Gateway may return a response body in JSON. The API Gateway may be safe to be accessed publicly. The API Gateway may be one in which all payments related operations for public facing services go through this API Gateway to internal backend services.

In an example, the API Gateway is in charge of authorising incoming public requests and proxies the responses from the payment methods backend service, for example from an abstraction for tokenisation and saved payment instruments management.

A payment methods retrieval application programming interface (API) is provided.

Interfacing with a mobile app may be provided. The API Gateway may be in charge of authorising incoming public requests. An API Gateway may be called a back end for front end (BFF), when the BFF serves responses to ease processing on the front end side. A front end includes a presentation layer. A back end includes a data accessing layer.

An aim is the single use case of card management, however in an example the full scope of this API Gateway is to support all payments use cases. The payment use cases may include one or more of, or all of: Initialise hosted fields; Tokenise; Forward; 3DS2.

### API Schema Examples for the Payments API Gateway

An example HTTP method is GET. An example endpoint path is /paymentmethods/ get/all. The Description is Retrieve all card payments methods of a traveller.

An example HTTP method is POST. An example endpoint path is /paymentmethods/ get/single. The Description is Retrieve a single card payment method of a traveller.

An example HTTP method is POST. An example endpoint path is /paymentmethods/ delete. The Description is Delete a card payment method of a traveller.

An example HTTP method is POST. An example endpoint path is /paymentmethods/ update. The Description is Update the specified card payment method of a traveller.

An example HTTP method is POST. An example endpoint path is /paymentmethods/ create. The Description is Create a card payment method for a traveller.

### Authentication

This section covers an example authentication layer for managing payment methods. In an example, clients are required to provide a traveller JSON Web Token (JWT) in all of their requests. In an example, for an app the JWT is part of a header. In an example, Web clients provide the JWT through their cookie. In an example, JWT middleware may be used for the purposes of verifying JWTs. In an example, requests on behalf of non-authenticated travellers are rejected.

### Data enrichment/ Schema extension

Front ends should where possible rely on the responses from the API Gateway. That's why in examples, as part of the requirements, we have to add certain fields to the responses. A concrete example is isExpired field which may tell the front end if the card has surpassed its expiry date. We don't want the value of that field to be derived client-side but instead it may be added as part of the response they receive. In an example, an abstraction for tokenisation and saved payment instruments management provides this functionality.

In an example, we don't have an enrichment layer as part of the Payments API Gateway. In an example, an enrichment layer as part of the Payments API Gateway is provided as part of a schema for an abstraction for tokenisation and saved payment instruments management.

Examples that may use enrichment:
isCardExpired - Payments API Gateway may provide this e.g. Boolean, eg. based on response of an abstraction for tokenisation and saved payment instruments management.
cardNetwork - Payments API Gateway may do the mapping from a cardNetwork id to a value. (vi -> visa, for instance). This is a finite list therefore the mapping in the API Gateway is possible.
cardNetwork logo - Payments API Gateway may provide a logo url based on the cardNetwork id so the APP can avoid including these images as part of the app release.
translations - Payments API Gateway might not provide this as a mobile App so one may still need to include the translation bundle as part of its release.

### Rest vs gRPC vs Proto/HTTP service

An example design covers exposing the card management endpoints via HTTPv1 using Json Content Type to communicate with apps. However, another example is a model where services are exposed via micro gateways using gRPC directly instead of a single gateway. An example solution is to use grpc-gateway deployed as a sidecar container with an application. The gRPC-Gateway is a plugin of the Google protocol buffers compiler protoc. It reads protobuf service definitions and generates a reverse-proxy server which translates a RESTful HTTP API into gRPC. This server is generated according to the google.api.http annotations in service definitions. This helps to provide your APIs in both gRPC and RESTful style at the same time. gRPC (gRPC Remote Procedure Calls) is a cross-platform high performance remote procedure call (RPC) framework. Protocol Buffers (Protobuf) may be used, which is a cross-platform data format used to serialize structured data.

The unified payments API Gateway, in an example, may be presented to web and app clients as an HTTP service using JSON. For internal calls the unified payments API Gateway may be accessible via gRPC.

In an example, all endpoints in the unified payments API Gateway are implemented first and foremost using gRPC and Protobuf contracts. These protobufs are considered the source of truth for our API definition. We then expose these endpoints as HTTP via the gRPC Gateway - a container which accepts JSON HTTP requests and converts them to gRPC requests for the unified payments API Gateway. In an example, we have chosen to prioritise gRPC norms over HTTP norms. For example, we return the appropriate gRPC status for errors, and let the gRPC Gateway set the HTTP response code. The gRPC Gateway may be deployed as part of the unified payments API Gateway, and we may convert this into a stand alone service configured via a (e.g. Drone) Plugin.

In an example, a Unified Payments API Gateway uses one or more, or all, of the following languages and frameworks: Java 11; cookie-cut Java service; Public APIs in REST over HTTP; an abstraction for tokenisation and saved payment instruments management using Protobuf APIs over HTTP.

### Payment Message Store

By building a message store, we are able to store payments data in isolation from any booking platform while other aspects of a purchase are prepared, allowing us to effectively separate our payments flow from our booking flow.

In an example, an API is provided that meets the requirements of storing all payment-related data for the duration of a booking process, which may include one or more or all of: Creating a new payment message; Updating an existing payment message; Retrieving details of an existing payment message by using a payment unique key.

An abstract payment message schema is provided that supports necessary payment-related data to support a full end-to-end purchase. This may include one or more, or all, of:
A unique payment id used throughout the whole payment process;
Support for both persistent and one-time payment methods;
The authentication details of the payment, e.g. 3DS2;
Payment fraud information;
A data storage layer infrastructure may be provided that supports all product and security requirements.

A mechanism may be provided that expires payment messages by removing items from the storage layer after converted or abandoned payment.

Security requirements may include one or more of, or all of: Access control system, e.g. define which services can call Payment message store; Audit log; Data encrypted at rest; Encrypted payment method identifiers.

Regarding a payment form backend, the payment form backend may write data to the Payment Message Store related to the payment-method-related details.

Regarding a Payment forwarding service, the Payment forwarding service may consume data from the Payment Message Store before mapping it to a partner's schema.

Regarding supply, partner connectors have a reference to the payment message identifier so they can pass it to the payment forwarding service.

### Example Payments Process

In an example payments process, a new payment message is created. A payment message store returns a unique id which is passed back to the front end. A payment method token is provided by a Payment Form.

In an example, Payment Data is consumed To Initiate A Payment Forward. A Payment Forwarding Service takes a payment reference from a supply stack and retrieves (e.g. all the) related information. The payment information is used to forward a payment.

In an example, Payment Method Data or Payment Method Identifier is updated. A traveller updates their billing address, or changes the desired payment method. A Payment Form Backend updates tokens/nonces generated by a vault provider for a given Payment item or changes other payment-method-related data such as Billing Address.

The price information is stored or updated.

A payment may be divided into different transactions. For example, travellers may want to purchase ancillaries in addition to their flight or hotel booking. The ancillaries typically share a lot of context with related hotels/ flights/ car hire bookings. In an alternative, we can process multiple bookings at the same time.

In an example, Authentication Data is populated. A 3DS2 service populates the 3ds2 authentication data to the payment store for a given Payment item.

Payments Reporting Data is populated. The Payment Form may populate some metadata fields such as market type, for the sake of reporting.

### Storage layer Cross-geographic region replication

A first option is to have no cross- geographic region replication. Advantages include that it is a simpler solution to implement, and that there is no overhead or latency of replication between geographic regions.

A second option is to have cross- geographic region replication. Advantages include that: it is region-agnostic, for example a payment can be created in one region and retrieved in another region; Resiliency in case of region failures during checkout flow; simpler solution for the payment-form integrations as they don't need to configure region specificity on their end.

### Payload encryption

In an example, we have the following constraints for the storage layer:
Data is very short-lived, we aim to implement a TTL basis approach which expires every single entry after a short period of time (e.g. 3 hours). Sensitive card details such as card number and CVV may be stored in their Token forms only.

Given we may be storing personally identifiable information (PII) data we use an option where sensitive data is not easily accessible.

A first option is JWT Token encryption. Advantages include: Encryption/decryption happens based on the traveller JWT, and there is no issue with multiregion replication. A second option is KMS encryption. Advantages include: Very secure mechanism; Available in all geographic regions, or available in many geographic regions; Multi geographic region encryption can be used for encrypting and decrypting data; Automatic key rotation.

A third option is Base64 Encoding. Advantages include: Simple to implement code-wise; It works well with multiregion replication.

Time to live (TTL) is a mechanism which limits the lifespan or lifetime of data in a computer or network. TTL may be implemented as a counter or timestamp attached to or embedded in the data. Once the prescribed event count or timespan has elapsed, data is discarded or revalidated. In computer networking, TTL prevents a data packet from circulating indefinitely. In computing applications, TTL is commonly used to improve the performance and manage the caching of data.

Amazon Web Services (AWS) Key Management Service (AWS KMS) is a managed service that makes it possible to create and control the cryptographic keys that are used to protect data. AWS KMS uses hardware security modules (HSM) to protect and validate AWS KMS keys under the FIPS 140-2 Cryptographic Module Validation Program.

The following are options for a datastore.

AWS ElastiCache (Redis) + Global replication provides multi-geographic region functionality. Multi-write is not supported. TTL is supported. Cross-region replication time is typically under one second. Encryption at rest is provided. Replicates data to all regions in a primary/secondary cluster approach; Writes can be done in one single region; Reads can be done in all regions.

AWS Dynamo DB + Global table provides multi-geographic region functionality. Multi-write is supported. TTL is supported. Cross-region replication time is usually within one second. Encryption at rest is provided. Global table config guarantees data is replicated across all regions; Writes and reads can be performed from any region; there is a built-in TTL mechanism without consuming write throughput.

Amazon Aurora multimaster does not provide multi-geographic region functionality. Multi-write is supported for one region. TTL is supported. Encryption at rest is provided. You can configure multiple primary instances to be able to write data. In case one goes down there is no outage as there will be other primary available to write.

Amazon Aurora singlemaster + Global databases provides multi-geographic region functionality. Multi-write is not supported. TTL is supported. Cross-region replication time is typically less than one second. Encryption at rest is provided. Same as Amazon Aurora multimaster with the ability to replicate data across regions. Writes still happen in one single region which has the primary instance. Reads can be done in all regions.

Amazon RDS (Aurora MySQL) provides multi-geographic region functionality. Multi-write is not supported. TTL is supported. Cross-region replication time is usually much less than 100 milliseconds. Encryption at rest is provided. Similar to Aurora, you can configure replicas in different regions to replicate data and have available to read; multi region write is not supported as it needs to happen in the primary instance; With Multi AZ enabled, standby replicas are constantly in sync in case of failover and the switch is Automatic; A factor which affects the replication lag for cross region replicas is the network latency between AWS Regions. If the two AWS Regions are too far apart, the network latency would be higher.

An example solution aims to allow speed in writes and reads within a same region, without the need to a cross-region write. The expectation is that the checkout process for a given booking happens within one region due to use of region consistency. However to cover for the case of region failures or gateway switches, payment-message-store is configured to support write/read from all regions. More specifically put, the system supports a booking process being initiated in one region and finalised in another if needed. Payments can be created in any region and it can be updated/read in all other regions as well. There's no notion of single (master) write region.

To be on the safe side, services calling payment-message-store may have a timeout configured greater than 1s to cover edge cases in replication data across regions.

### (DynamoDB) Data Loss Prevention

DynamoDB's multi-region writes have a gap in consistency. The behaviour is that a last write in any region may be the source of truth for an item/row uniquely identified by its unique key. This makes it possible to lose data when multiple updates come from different regions. Options to reliably prevent this from happening include the following.

### Option 1 (Update case)

We have multiple items/rows for the same payment. Each row is a write event for the same payment id. This way an update for a particular piece of data may not override another data from a simultaneous update.

Updates are partial and each "update case" has its own proto schema.

We are able to work this model because we know upfront all the usecases for all writes operations of the payment store.

Full payment payload is constructed server-side only on read time, in an example.

In an example, the specific "update cases" may match the permissions from the access control mechanism proposal.

It's challenging to enforce UTID (Universally Traceable Identifier) validation for write operations for a particular payment, as the utid may only be available in the initial write.

If simultaneous updates happen for the same update case in two different regions, then we may take the latest one as the source of truth for that part of the payment method. We expect that the chance of this happening is very low.

### Example Setup

Create composite DynamoDB primary key of Partition Key + Sort Key
Partition key = payment_id
Sort key = type of write operation performed + timestamp + AWS region
Attribute Payload = the protobuf binary of the update content from the write request:
   The payment method token typically will be encrypted.

### Example On write operation

Construct item <PartitionKey=payment_id> <SortKey=update_case> <Payload=base64_protobuf>

### Example On read operation

Query all items for the partition key payment id
Construct a payment item from all the write events
For each update case, we may take the latest one as source of truth

A sort key may contain the update type, timestamp and region which allows us to keep a history of the payment and the ability to construct a Payment Message from the latest updates.

### Option 2 (Conditional update with VERSION timestamp)

We may have just a single item/row for the same payment. Payload attribute holds the source of truth for the whole payment. Conditional write may be performed to check if the latest version of the whole payment payload may be mutated to prevent data loss of other simultaneous updates.

Updates may be partial and each "update case" has its own proto schema.

Full payment payload is constructed server-side by combining the original payment payload and mutating based on the update data from the client. It is then stored as a value for a table attribute.

It's possible to enforce utid validation for write operation as the utid may always be available in the Payment payload.

If simultaneous updates happen for two different regions, then we may have a potential data loss. We expect that the chance of this happening is very low.

### Example Setup

### Partition key = payment_id

Attribute Payload = Payment proto object constructed on any write operation by using previous data and mutating from the update data. This may be encrypted.
Attribute version = the timestamp in milliseconds of last update

### Example On write operation

Client constructs the update request
Add new data they want to apply to the Payment
Provides the "version" retrieved from Payment Message Store for the already existing payment item/row. If version mismatches we can reject the call at this point.
Payment message store retrieves last known Payload
Payment message store mutates the last known Payment object by applying the new data from the request.

Payment message performs a conditional write to the local DynamoDB table.

The condition is that the provided version in the update request matches the currently stored version.

If rejected, return 409 code and rely on the client to retry the update request by first retrieving the correct latest version.

### Option 3 (combination of 1 and 2)

For this option we get the benefit of multiple items based on case for each payment + the conditional update based on version.

In case of multiple writes at the same time for different cases they won't override each other. If it's for the same case then we may also have the VERSION with Conditional update which may allow only the 1st update to go through. The 2nd will get a 409 code conflict and will have to retry.

Clients may have to first retrieve the payment "case" in other to send the current VERSION back in the update request.
multiple region writes and reads (no single write region)
one item/row for each part of the payload (3ds2, fraud, payment method, etc.)
SortKey on Dynamo may contain "update case" + region (the region aims to prevent data loss in case two updates come at the same time in different regions)
each item may also contain VERSION (timestamp)
A conditional update logic may be present on this field.

In case of first update for a "case" there may be no version yet. This field may be used for subsequent updates for the same case.

### Limitation:

Depending on the each Payment Form flow, two requests may be triggered at the same time:
one for the Payment Message Store to store PAN/CVV data;
one for the Forwarding Service to communicate with our partners. This request may then lead to a read request on Payment Message Store to retrieve payment data;
in case the second request happens very quickly there's a chance the PAN/CVV data was not stored/replicated across all regions (cross-region replication takes average 1s). If that's the case we may implement an internal retry mechanism as DynamoDB may return a 404 not found status.

### Use cases

### Scenario 1

Payment form has region determination configured
All requests (e.g. handshake, payment confirmation, etc.) may come to the same region
Data is available and up-to-date in the same region

### Scenario 2

Payment form has region flexibility configured
1st request (e.g. handshake or any write request) comes in Region 1
2nd request (e.g. payment confirmation or any update/read request) comes in Region 2
Given there's a time in between requests (for example, different steps in the payment form/checkout flow) the data may be replicated across multiple regions.

In case this time is not enough, optionally Scenario 4 mitigations may be implemented.

### Scenario 3

Payment form has region determination configured
1st request (handshake) comes in Region 1
Region 1 has an outage (or a blip) and it gets removed from infrastructure (also from public gateway)
2nd request comes in and because Region 1 is down, it gets redirected to Region 2. If there was sufficient time for data to be replicated from Region 1 to Region 2 before the outage, checkout flow is not affected.

### Scenario 4

Payment form has region flexibility configured
1st request (write) comes in region 1 and 2nd request (read) comes after e.g. 10ms in Region 2. Data is not yet replicated. Possible options to mitigate;
Retry mechanism implemented on payment-message-store service side (clients don't have to know it exists);
Trigger parallel calls to other regions to retrieve the data when the first call doesn't find the entry.

### Resilience to Failure

The following may be implemented:
- Multi-region writes and reads
- Cross-region data replication

In case a region goes down, or even a partial outage where a region is having difficulties, our service is resilient enough to support requests coming from other regions.

There should be no real impact other than some requests being retried while the region switch happens in the gateway.

### Language and Frameworks

### API Example Features

- cookiecut gRPC service in Java
- Internal service, not accessible through public Internet
- Deployed in cells infrastructure in the geographic regions

### Storage layer example, e.g. DynamoDB

- Global Table in the geographic regions
- TTL enabled e.g. to 3 hours. An example chosen database is DynamoDB: a database may still return results in longer time frame, e.g. up to 48hrs, after they have expired (due to its background process to delete expired items) so we may also enforce on query time that we only return items within a valid TTL.
- Encryption at rest may be provided.

### Example Payment Forwarding Service

In an example, a Payment Forwarding Service is the payment forwarding section of a Payments Platform Architecture. The Payment Forwarding Service may satisfy the following requirements:
1. Uses Java as its main language
2. Performs the mapping of payment information within the request body
3. Forward the partner requests via a further forwarding service to our partners.
4. Handle the response and inform users of the result of their request.

The Payment Forwarding Service may achieve the following goals:
a service that can take a forwarding request from partner integrations, inserts payment data via a payment id and forward the integration via a further forwarding service.

To observe the principle that "Any part of payment message information should not be exposed to consumers' stacks unless the use-case is confirmed to be unavoidable". For example, only non-PCI and non-PII information is shared.

### Assumptions:

The payment data store informs us of the type of payment method the customer has used. The payment data store may provide the same type of data provided to current consumers of the Flights booking process.

### Overview and Theory of Operation

The payment forwarding service may have two main responsibilities. These are:
1. To insert information from the Payment Data store into the Partner request body provided by the partner integrations.
2. To support the forwarding of Partner requests through forwarding partners such as a further forwarding service. This enables the insertion of PCI information such as the PAN number and CVV. The card number (also PAN: primary account number) (PAN or simply called 'card number') is the 16-digit number. The card verification value (CVV) is the three-digit number located on the back of card, next to the signature. As such, we discuss each of these responsibilities in isolation as well as how they interact with one another in the service.

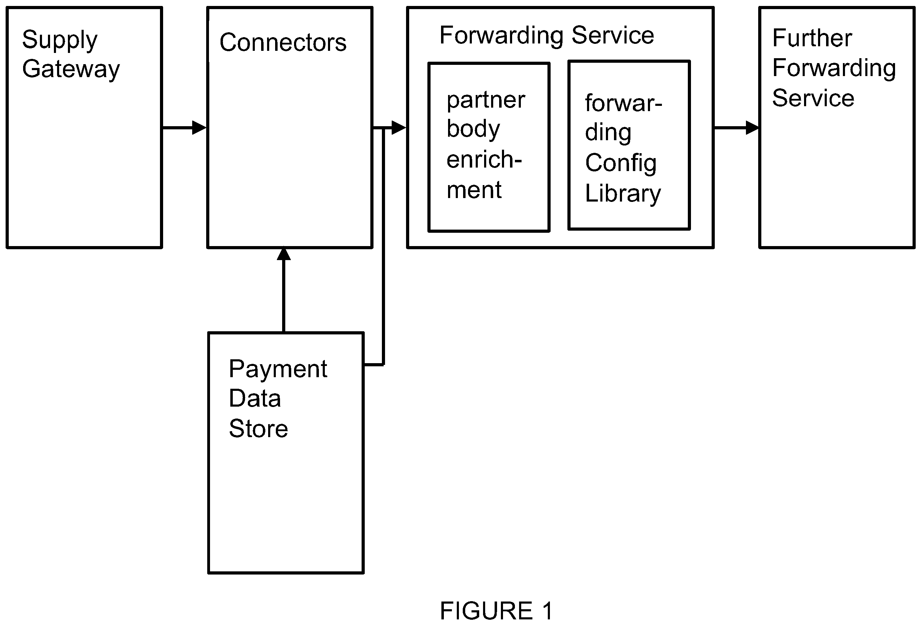

**Figure 1** shows a diagram of an example of a payment forwarding service. In **Figure 1**, the supply gateway is responsible for supplying the paymentid or accessing the datastore. In **Figure 1**, the connectors are responsible for: preparing the request to the forwarding service with field substitution for payment info; contacting the payment data store for the type of payment and a list of set fields. In **Figure 1**, the payment data store is responsible for providing the payment information. In **Figure 1**, the forwarding service includes partner body enrichment and forwarding Config Library. The partner body enrichment is responsible for enriching the partner request with payment information. The forwarding Config Library is responsible for generating configurations for production forwarding. In **Figure 1**, the further forwarding service is responsible for inserting PCI data and forwarding requests to partners.

In an example of a payment forwarding service, a supply gateway is responsible for supplying the paymentid or accessing the datastore; connectors are responsible for: preparing the request to the forwarding service with field substitution for payment info; contacting the payment data store for the type of payment and a list of set fields. In an example of a payment forwarding service, the payment data store is responsible for providing the payment information. In an example of a payment forwarding service, the forwarding service includes partner body enrichment and forwarding Config Library. The partner body enrichment is responsible for enriching the partner request with payment information. The forwarding Config Library is responsible for generating configurations for production forwarding. In an example of a payment forwarding service, a further forwarding service is responsible for inserting PCI data and forwarding requests to partners.

### Inserting Payment Data into the partner request

In the payment architecture, we maintain a separation of payment information from outside stacks.

### Partner requests containing field Substitution for payment Info.

### Example of Field substitution:

<Payment>
<BillingAddress>
<AddressLineOne>{{BillingAddress.AddressLineOne}}</AddressLineOne>
</BillingAddress>
<Card>
<Scheme>{{Payment.CardType}}</Scheme>
</Payment>

In an example, only non-PCI and non-PII information is shared. Advantages include that: this ensures that integrations are aware of the information they require to make the payments work; more work is required on the data store to return a list of set fields; this allows integrations to do the mapping work; this ensures that the trust boundary still exists for PII and PCI data.

### Solution: Forwarding Config Library

By defining templates in code (e.g. that can build a JSON template), Supply may generate "subtemplates" to allow for variations between different payment instruments. These final "subtemplates" may be stored as test fixtures in a git repository and are expected to match bit-for-bit with the templates submitted to the further forwarding system since the template JSON isn't sent over the wire for production requests. As part of this design, we have considered the following:
The design may allow users to access the further forwarding system functionality being used across the templates.

The design may allow users to validate the request generated from forwarding against the expected request.

The design may allow users to generate the production configs to send to partners.

### Migrating existing Further Forwarding System Templates

The Further Forwarding System's forwarding configuration requires templates to specify the types of payment instruments (e.g. "AndroidPayCard", "CreditCard", "UsBankAccount") that are acceptable for forwarding through this template. This may allow implementers to "work backwards", placing an already defined forwarding configuration as a test fixture and creating unit tests/template generation code based on this.

### Template Generation - Templates as Code, Example

var policy = new ForwardingPolicyBuilder()
. setName("requestbin")
.setUrl("^https://requestbin\\.net/(.*?)$")
. setMethods(List. of(" GET"))
.setRequestFormats(Map.of("/body", RequestFormats.JSON))
.setTypes(List.of(PaymentInstruments.CREDIT_CARD))
transformation()
path("/body/verify/credit_card/number")
.value("$number")
build().done()
. buildFPF SPolicy();

### An example Payment Forwarding Service Message

```
Syntax proto3
 message ForwardingRequest{
 string partnerRequestBody = 1; //Request body for partner
 map<string, string> headers = 2; // Headers for the request to the partner
 string paymentID = 3; //reference to the payment info stored in the payment data store
 string forwardingConfigName = 4; //This is the reference to what Further Payment
 Forwarding service config to use for forwarding.
 string forwardUrl = 5; //url to forward to
 }
 message ForwardingResponse {
 HttpStatus status = 1;
 oneof response_types: {
 PartnerResponse response = 2;
 String errorResponse = 3;
 }
 }
 message PartnerResponse{
 string body = 1;
 map<string, string> headers = 2;
 String statusCode =3;
 }
```

### Amazon DynamoDB

Amazon DynamoDB is a fully managed proprietary NoSQL database service that supports key-value and document data structures and is offered by Amazon.com as part of the Amazon Web Services portfolio. DynamoDB uses synchronous replication across multiple data centers for high durability and availability. DynamoDB was announced by Amazon CTO Werner Vogels on January 18, 2012, and is presented as an evolution of Amazon SimpleDB. A NoSQL (originally referring to "non-SQL" or "non-relational") database provides a mechanism for storage and retrieval of data that is modeled using relations other than the tabular relations used in relational databases.

### JSON (JavaScript Object Notation)

JSON (JavaScript Object Notation) is an open standard file format and data interchange format that uses human-readable text to store and transmit data objects consisting of attribute-value pairs and arrays (or other serializable values). It is a common data format with diverse uses in electronic data interchange, including that of web applications with servers.

JSON is a language-independent data format. It was derived from JavaScript, but many modern programming languages include code to generate and parse JSON-format data. JSON filenames use the extension .json.

### Amazon Ion

Amazon Ion is a data serialization language developed by Amazon. It may be represented by either a human-readable text form or a compact binary form. The text form is a superset of JSON; thus, any valid JSON document is also a valid Ion document.

### Representational state transfer (REST)

Representational state transfer (REST) is a software architectural style that was created to guide the design and development of the architecture for the World Wide Web. REST defines a set of constraints for how the architecture of an Internet-scale distributed hypermedia system, such as the Web, should behave. The REST architectural style emphasises the scalability of interactions between components, uniform interfaces, independent deployment of components, and the creation of a layered architecture to facilitate caching of components to reduce user-perceived latency, enforce security, and encapsulate legacy systems.

REST has been employed throughout the software industry and is a widely accepted set of guidelines for creating stateless, reliable web APIs. A web API that obeys the REST constraints is informally described as RESTful. RESTful web APIs are typically loosely based on HTTP methods to access resources via URL-encoded parameters and the use of JSON or XML to transmit data.

### Note

It is to be understood that the above-referenced arrangements are only illustrative of the application for the principles of the present invention.

## Claims

1. A computer-implemented method of responding to a payment request, the method including the steps of:
(i) a vendor server receiving a request from a user terminal to purchase goods or services for a transaction amount;
(ii) the vendor server requesting, in a transaction request including the transaction amount, a first reference code from a payment provider server, and the vendor server receiving the first reference code from the payment provider server, wherein the payment provider server stores the transaction amount in association with the first reference code;
(iii) the vendor server sending transaction data including the transaction amount and the first reference code to a vendor payments computer system;
(iv) the vendor payments computer system generating a second reference code uniquely associated with the first reference code, and sending the second reference code to a vendor secure server;
(v) the vendor secure server providing an interface to the user terminal in which payment details are receivable from the user terminal;
(vi) the vendor secure server receiving, via the interface, the payment details from the user terminal, in which the payment details are not accessible from any computer system in connection with the vendor secure server, except from the payment provider server;
(vii) the vendor secure server forwarding the received payment details from the user terminal to the payment provider server, and the vendor secure server sending the second reference code to the payment provider server;
(viii) the payment provider server generating a third reference code from the received second reference code, the payment provider server checking that the third reference code is the same as the first reference code, to check that the transaction is genuine;
(ix) in response to determining that the third reference code is the same as the first reference code, the payment provider server processing the payment request, including the received payment details and including the transaction amount, to determine if the payment request is accepted;
(x) in response to determining that the payment request is accepted, the payment provider server sending confirmation of acceptance of the payment request to the vendor payments computer system, or in response to determining that the payment request is refused, the payment provider server sending refusal of acceptance of the payment request to the vendor payments computer system.

2. The method of Claim 1, wherein the payment details are payment card details.

3. The method of Claim 2, in which the payment card details include customer name, credit card number, credit card expiration date.

4. The method of any previous Claim, in which in step (ix), the transaction amount is identified using the first reference code.

5. The method of any previous Claim, in which the goods or services are a flight booking, a hotel booking, or a vehicle rental booking.

6. The method of any previous Claim, in which the vendor server hosts a travel website, the travel website providing multiple travel services.

7. The method of any previous Claim, in which no payment information leaks into the vendor's systems which include a travel service's stack.

8. The method of Claim 7, in which the only piece of information that is passed within the stack is the second reference code or the payment stack's transaction id.

9. The method of any previous Claim, in which when the user is using the user terminal to pay, there is just one vendor service to interact with which is the vendor secure server.

10. The method of any previous Claim, in which the vendor secure server is not aware of travel service specifics; but the vendor secure server is aware of payment system specifics.

11. The method of any previous Claim, in which data received via input into the interface is not accessible to the vendor secure server.

12. The method of any previous Claim, in which the vendor secure server which provides the interface where the payment card details are entered is responsive only to the user who inputs the payment details, and cannot be accessed by personnel who operate the vendor secure server.

13. A payment platform computer system including a vendor server, a vendor payments computer system, a vendor secure server and a payment provider server, in which:
(i) the vendor server is configured to receive a request from a user terminal to purchase goods or services for a transaction amount;
(ii) the vendor server is configured to request, in a transaction request including the transaction amount, a first reference code from the payment provider server, and the vendor server is configured to receive the first reference code from the payment provider server, wherein the payment provider server is configured to store the transaction amount in association with the first reference code;
(iii) the vendor server is configured to send transaction data including the transaction amount and the first reference code to the vendor payments computer system;
(iv) the vendor payments computer system is configured to generate a second reference code uniquely associated with the first reference code, and to send the second reference code to the vendor secure server;
(v) the vendor secure server is configured to provide an interface to the user terminal in which payment details are receivable from the user terminal;
(vi) the vendor secure server is configured to receive, via the interface, the payment details from the user terminal, in which the payment details are not accessible from any computer system in connection with the vendor secure server, except from the payment provider server;
(vii) the vendor secure server is configured to forward the received payment details from the user terminal to the payment provider server, and the vendor secure server is configured to send the second reference code to the payment provider server;
(viii) the payment provider server is configured to generate a third reference code from the received second reference code, and the payment provider server is configured to check that the third reference code is the same as the first reference code, to check that the transaction is genuine;
(ix) the payment provider server is configured to, in response to determining that the third reference code is the same as the first reference code, process the payment request, including the received payment details and including the transaction amount, to determine if the payment request is accepted;
(x) the payment provider server is configured to, in response to determining that the payment request is accepted, send confirmation of acceptance of the payment request to the vendor payments computer system; and/or the payment provider server is configured to, in response to determining that the payment request is refused, send refusal of acceptance of the payment request to the vendor payments computer system.

14. The payment platform computer system of Claim 13, including a mobile device user terminal configured to execute an application, in which the user terminal is the mobile device user terminal, in which:
In (i) the vendor server is configured to receive the request from the application executing on the mobile device user terminal to purchase the goods or services for the transaction amount;
In (v) the vendor secure server is configured to provide the interface to the mobile device user terminal in which the payment details are receivable from the mobile device user terminal;
In (vi) the vendor secure server is configured to receive, via the interface, the payment details from the application executing on the mobile device user terminal, in which the received payment details are not accessible from the vendor secure server by any computer system in connection with the vendor secure server, except from the payment provider server.

15. The payment platform computer system of Claim 13, including a computer user terminal configured to execute an application, in which the user terminal is the computer user terminal, in which:
In (i) the vendor server is configured to receive the request from the application executing on the computer user terminal to purchase the goods or services for the transaction amount;
In (v) the vendor secure server is configured to provide the interface to the computer user terminal in which the payment details are receivable from the computer user terminal;
In (vi) the vendor secure server is configured to receive, via the interface, the payment details from the application executing on the computer user terminal, in which the received payment details are not accessible from the vendor secure server by any computer system in connection with the vendor secure server, except from the payment provider server.

16. The system of any of Claims 13 to 15, configured to perform a method of any of Claims 1 to 12.

## Patentansprüche

1. Computerimplementiertes Verfahren zur Reaktion auf eine Zahlungsanfrage, wobei das Verfahren die folgenden Schritte beinhaltet:
(i) Empfangen, durch einen Anbieterserver, einer Anfrage von einem Benutzerendgerät, um Güter oder Dienste für einen Transaktionsbetrag zu kaufen;
(ii) Anfragen, durch den Anbieterserver, in einer Transaktionsanfrage, die den Transaktionsbetrag beinhaltet, eines ersten Referenzcodes von einem Zahlungsbereitstellungsserver und Empfangen, durch den Anbieterserver, des ersten Referenzcodes von dem Zahlungsbereitstellungsserver, wobei der Zahlungsbereitstellungsserver den Transaktionsbetrag unter Zuordnung zu dem ersten Referenzcode speichert;
(iii) Senden, durch den Anbieterserver, von Transaktionsdaten, die den Transaktionsbetrag und den ersten Referenzcode beinhalten, an ein Anbieterzahlungscomputersystem;
(iv) Erzeugen, durch das Anbieterzahlungscomputersystem, eines zweiten Referenzcodes, der dem ersten Referenzcode eindeutig zugeordnet ist, und Senden des zweiten Referenzcodes an einen gesicherten Anbieterserver;
(v) Bereitstellen, durch den gesicherten Anbieterserver, einer Schnittstelle an das Benutzerendgerät, in der Zahlungseinzelheiten von dem Benutzerendgerät empfangbar sind;
(vi) Empfangen, durch den gesicherten Anbieterserver, über die Schnittstelle, der Zahlungseinzelheiten von dem Benutzerendgerät, in dem die Zahlungseinzelheiten aus keinem Computersystem, das mit dem gesicherten Anbieterserver verbunden ist, zugänglich sind, außer aus dem Zahlungsbereitstellungsserver;
(vii) Weiterleiten, durch den gesicherten Anbieterserver, der empfangenen Zahlungseinzelheiten von dem Benutzerendgerät an den Zahlungsbereitstellungsserver und Senden, durch den gesicherten Anbieterserver, des zweiten Referenzcodes an den Zahlungsbereitstellungsserver;
(viii) Erzeugen, durch den Zahlungsbereitstellungsserver, eines dritten Referenzcodes aus dem empfangenen zweiten Referenzcode, wobei der Zahlungsbereitstellungsserver überprüft, dass der dritte Referenzcode der gleiche wie der erste Referenzcode ist, um zu überprüfen, dass die Transaktion wahrhaftig ist;
(ix) als Reaktion auf Bestimmen, dass der dritte Referenzcode der gleiche wie der erste Referenzcode ist, Verarbeiten, durch den Zahlungsanbieterserver, der Zahlungsanfrage, welche die empfangenen Zahlungseinzelheiten beinhaltet und den Transaktionsbetrag beinhaltet, um zu bestimmen, ob die Zahlungsanfrage akzeptiert wird;
(x) als Reaktion auf Bestimmen, dass die Zahlungsanfrage akzeptiert wird, Senden, durch den Zahlungsbereitstellungsserver, einer Bestätigung der Akzeptierung der Zahlungsanfrage an das Anbieterzahlungscomputersystem oder als Reaktion auf Bestimmen, dass die Zahlungsanfrage abgelehnt wird, Senden, durch den Zahlungsbereitstellungsserver, einer Ablehnung der Akzeptierung der Zahlungsanfrage an das Anbieterzahlungscomputersystem.

2. Verfahren nach Anspruch 1, wobei die Zahlungseinzelheiten Zahlungskarteneinzelheiten sind.

3. Verfahren nach Anspruch 2, wobei die Zahlungskarteneinzelheiten einen Kundennamen, eine Kreditkartennummer, ein Kreditkartenablaufdatum beinhalten.

4. Verfahren nach einem der vorhergehenden Ansprüche, wobei in Schritt (ix) der Transaktionsbetrag unter Verwendung des ersten Referenzcodes identifiziert wird.

5. Verfahren nach einem der vorhergehenden Ansprüche, wobei die Güter oder die Dienste eine Flugbuchung, eine Hotelbuchung oder eine Fahrzeugverleihbuchung sind.

6. Verfahren nach einem der vorhergehenden Ansprüche, wobei der Anbieterserver eine Reisewebsite hostet, wobei die Reisewebsite mehrere Reisedienste bereitstellt.

7. Verfahren nach einem der vorhergehenden Ansprüche, wobei keine Zahlungsinformationen in Systeme des Anbieters entweichen, die einen Stack eines Reisedienstes beinhalten.

8. Verfahren nach Anspruch 7, wobei das einzige Datenelement, das innerhalb des Stacks übergeben wird, der zweite Referenzcode oder eine Transaktions-ID des Zahlungs-Stacks ist.

9. Verfahren nach einem der vorhergehenden Ansprüche, wobei, wenn der Benutzer das Benutzerendgerät verwendet, um zu zahlen, es lediglich einen Anbieterdienst gibt, mit dem zu interagieren ist, welcher der gesicherte Anbieterserver ist.

10. Verfahren nach einem der vorhergehenden Ansprüche, wobei der gesicherte Anbieterserver keine Reisedienstbesonderheiten kennt; der gesicherte Anbieterserver jedoch Zahlungssystembesonderheiten kennt.

11. Verfahren nach einem der vorhergehenden Ansprüche, wobei Daten, die über eine Eingabe in die Schnittstelle empfangen werden, dem gesicherten Anbieterserver nicht zugänglich sind.

12. Verfahren nach einem der vorhergehenden Ansprüche, wobei der gesicherte Anbieterserver, der die Schnittstelle bereitstellt, in welche die Zahlungskarteneinzelheiten eingetragen werden, nur auf den Benutzer reagiert, der die Zahlungseinzelheiten eingibt, und Personal, das den gesicherten Anbieterserver betreibt, nicht auf diesen zugreifen kann.

13. Computersystem für eine Zahlungsplattform, das einen Anbieterserver, ein Anbieterzahlungscomputersystem, einen gesicherten Anbieterserver und einen Zahlungsbereitstellungsserver beinhaltet, wobei:
(i) der Anbieterserver dazu konfiguriert ist, eine Anfrage von einem Benutzerendgerät zu empfangen, um Güter oder Dienste für einen Transaktionsbetrag zu kaufen;
(ii) der Anbieterserver dazu konfiguriert ist, in einer Transaktionsanfrage, die den Transaktionsbetrag beinhaltet, einen ersten Referenzcode bei dem Zahlungsbereitstellungsserver anzufragen, und der Anbieterserver dazu konfiguriert ist, den ersten Referenzcode von dem Zahlungsbereitstellungsserver zu empfangen, wobei der Zahlungsbereitstellungsserver dazu konfiguriert ist, den Transaktionsbetrag unter Zuordnung zu dem ersten Referenzcode zu speichern;
(iii) der Anbieterserver dazu konfiguriert ist, Transaktionsdaten, die den Transaktionsbetrag und den ersten Referenzcode beinhalten, an das Anbieterzahlungscomputersystem zu senden;
(iv) das Anbieterzahlungscomputersystem dazu konfiguriert ist, einen zweiten Referenzcode zu erzeugen, der dem ersten Referenzcode eindeutig zugeordnet ist, und den zweiten Referenzcode an den gesicherten Anbieterserver zu senden;
(v) der gesicherte Anbieterserver dazu konfiguriert ist, eine Schnittstelle an das Benutzerendgerät bereitzustellen, in der Zahlungseinzelheiten von dem Benutzerendgerät empfangbar sind;
(vi) der gesicherte Anbieterserver dazu konfiguriert ist, über die Schnittstelle die Zahlungseinzelheiten von dem Benutzerendgerät zu empfangen, in dem die Zahlungseinzelheiten aus keinem Computersystem, das mit dem gesicherten Anbieterserver verbunden ist, zugänglich sind, außer aus dem Zahlungsbereitstellungsserver;
(vii) der gesicherte Anbieterserver dazu konfiguriert ist, die empfangenen Zahlungseinzelheiten von dem Benutzerendgerät an den Zahlungsbereitstellungsserver weiterzuleiten, und der gesicherte Anbieterserver dazu konfiguriert ist, den zweiten Referenzcode an den Zahlungsbereitstellungsserver zu senden;
(viii) der Zahlungsbereitstellungsserver dazu konfiguriert ist, einen dritten Referenzcode aus dem empfangenen zweiten Referenzcode zu erzeugen, und der Zahlungsbereitstellungsserver dazu konfiguriert ist, zu überprüfen, dass der dritte Referenzcode der gleiche wie der erste Referenzcode ist, um zu überprüfen, dass die Transaktion wahrhaftig ist;
(ix) der Zahlungsbereitstellungsserver dazu konfiguriert ist, als Reaktion auf Bestimmen, dass der dritte Referenzcode der gleiche wie der erste Referenzcode ist, die Zahlungsanfrage, welche die empfangenen Zahlungseinzelheiten beinhaltet und den Transaktionsbetrag beinhaltet, zu verarbeiten, um zu bestimmen, ob die Zahlungsanfrage akzeptiert wird;
(x) der Zahlungsbereitstellungsserver dazu konfiguriert ist, als Reaktion auf Bestimmen, dass die Zahlungsanfrage akzeptiert wird, eine Bestätigung der Akzeptierung der Zahlungsanfrage an das Anbieterzahlungscomputersystem zu senden; und/oder der Zahlungsbereitstellungsserver dazu konfiguriert ist, als Reaktion auf Bestimmen, dass die Zahlungsanfrage abgelehnt wird, eine Ablehnung der Akzeptierung der Zahlungsanfrage an das Anbieterzahlungscomputersystem zu senden.

14. Computersystem für eine Zahlungsplattform nach Anspruch 13, das ein mobiles Vorrichtungsbenutzerendgerät beinhaltet, das dazu konfiguriert ist, eine Anwendung auszuführen, wobei das Benutzerendgerät das mobile Vorrichtungsbenutzerendgerät ist, wobei:
in (i) der Anbieterserver dazu konfiguriert ist, die Anfrage von der Anwendung zu empfangen, die auf dem mobilen Vorrichtungsbenutzerendgerät ausgeführt wird, um die Güter oder die Dienste für den Transaktionsbetrag zu kaufen;
in (v) der gesicherte Anbieterserver dazu konfiguriert ist, die Schnittstelle an das mobile Vorrichtungsbenutzerendgerät bereitzustellen, in der die Zahlungseinzelheiten von dem mobilen Vorrichtungsbenutzerendgerät empfangbar sind;
in (vi) der gesicherte Anbieterserver dazu konfiguriert ist, über die Schnittstelle die Zahlungseinzelheiten von der Anwendung zu empfangen, die auf dem mobilen Vorrichtungsbenutzerendgerät ausgeführt wird, in dem die empfangenen Zahlungseinzelheiten aus dem gesicherten Anbieterserver für kein Computersystem, das mit dem gesicherten Anbieterserver verbunden ist, zugänglich sind, außer aus dem Zahlungsbereitstellungsserver.

15. Computersystem für eine Zahlungsplattform nach Anspruch 13, das ein Computerbenutzerendgerät beinhaltet, das dazu konfiguriert ist, eine Anwendung auszuführen, wobei das Benutzerendgerät das Computerbenutzerendgerät ist, wobei:
in (i) der Anbieterserver dazu konfiguriert ist, die Anfrage von der Anwendung zu empfangen, die auf dem Computerbenutzerendgerät ausgeführt wird, um die Güter oder die Dienste für den Transaktionsbetrag zu kaufen;
in (v) der gesicherte Anbieterserver dazu konfiguriert ist, die Schnittstelle an das Computerbenutzerendgerät bereitzustellen, in der die Zahlungseinzelheiten von dem Computerbenutzerendgerät empfangbar sind;
in (vi) der gesicherte Anbieterserver dazu konfiguriert ist, über die Schnittstelle die Zahlungseinzelheiten von der Anwendung zu empfangen, die auf dem Computerbenutzerendgerät ausgeführt wird, in dem die empfangenen Zahlungseinzelheiten aus dem gesicherten Anbieterserver für kein Computersystem, das mit dem gesicherten Anbieterserver verbunden ist, zugänglich sind, außer aus dem Zahlungsbereitstellungsserver.

16. System nach einem der Ansprüche 13 bis 15, das dazu konfiguriert ist, ein Verfahren nach einem der Ansprüche 1 bis 12 durchzuführen.

## Revendications

1. Procédé mis en œuvre par ordinateur pour répondre à une demande de paiement, le procédé comprenant les étapes consistant à :
(i) par un serveur de vendeur, recevoir une demande provenant d'un terminal d'utilisateur pour acheter des biens ou des services pour un montant de transaction ;
(ii) par le serveur de vendeur, demander, dans une demande de transaction comprenant le montant de la transaction, un premier code de référence à partir d'un serveur de fournisseur de paiement, et par le serveur de vendeur, recevoir le premier code de référence provenant du serveur de fournisseur de paiement, dans lequel le serveur de fournisseur de paiement stocke le montant de la transaction en association avec le premier code de référence ;
(iii) par le serveur de vendeur, envoyer des données de transaction comprenant le montant de la transaction et le premier code de référence à un système informatique de paiements de vendeur ;
(iv) par le système informatique de paiements de vendeur, générer un deuxième code de référence associé de manière unique au premier code de référence, et envoyer le deuxième code de référence à un serveur sécurisé de vendeur ;
(v) par le serveur sécurisé de vendeur, fournir une interface au terminal d'utilisateur dans laquelle des détails de paiement peuvent être reçus à partir du terminal d'utilisateur ;
(vi) par le serveur sécurisé de vendeur, recevoir, via l'interface, les détails de paiement provenant du terminal d'utilisateur, dans lequel les détails de paiement ne sont accessibles à partir d'aucun système informatique en relation avec le serveur sécurisé de vendeur, à l'exception du serveur de fournisseur de paiement ;
(vii) par le serveur sécurisé de vendeur, transférer les détails de paiement reçus provenant du terminal d'utilisateur au serveur de fournisseur de paiement, et par le serveur sécurisé de vendeur, envoyer le deuxième code de référence au serveur de fournisseur de paiement ;
(viii) par le serveur de fournisseur de paiement, générer un troisième code de référence à partir du deuxième code de référence reçu, par le serveur de fournisseur de paiement, vérifier que le troisième code de référence est identique au premier code de référence, pour vérifier que la transaction est authentique ;
(ix) en réponse à la détermination que le troisième code de référence est identique au premier code de référence, par le serveur de fournisseur de paiement, traiter la demande de paiement, comprenant les détails de paiement reçus et comprenant le montant de la transaction, pour déterminer si la demande de paiement est acceptée ;
(x) en réponse à la détermination que la demande de paiement est acceptée, par le serveur de fournisseur de paiement, envoyer une confirmation d'acceptation de la demande de paiement au système informatique de paiements de vendeur, ou en réponse à la détermination que la demande de paiement est refusée, par le serveur de fournisseur de paiement, envoyer un refus d'acceptation de la demande de paiement au système informatique de paiements de vendeur.

2. Procédé selon la revendication 1, dans lequel les détails de paiement sont des détails de carte de paiement.

3. Procédé selon la revendication 2, dans lequel les détails de carte de paiement comprennent le nom du client, le numéro de carte de crédit, la date d'expiration de la carte de crédit.

4. Procédé selon l'une quelconque des revendications précédentes, dans lequel à l'étape (ix), le montant de la transaction est identifié en utilisant le premier code de référence.

5. Procédé selon l'une quelconque des revendications précédentes, dans lequel les biens ou les services sont une réservation de vol, une réservation d'hôtel ou une réservation de location de véhicule.

6. Procédé selon l'une quelconque des revendications précédentes, dans lequel le serveur de vendeur héberge un site Web de voyage, le site Web de voyage fournissant de multiples services de voyage.

7. Procédé selon l'une quelconque des revendications précédentes, dans lequel aucune information de paiement ne fuit dans les systèmes du vendeur qui comprennent une pile de services de voyage.

8. Procédé selon la revendication 7, dans lequel la seule information qui est transmise au sein de la pile est le deuxième code de référence ou l'identifiant de transaction de la pile de paiement.

9. Procédé selon l'une quelconque des revendications précédentes, dans lequel lorsque l'utilisateur utilise le terminal d'utilisateur pour payer, il n'y a qu'un seul service de vendeur avec lequel interagir qui est le serveur sécurisé de vendeur.

10. Procédé selon l'une quelconque des revendications précédentes, dans lequel le serveur sécurisé de vendeur n'a pas connaissance des spécificités du service de voyage ; mais le serveur sécurisé de vendeur a connaissance des spécificités du système de paiement.

11. Procédé selon l'une quelconque des revendications précédentes, dans lequel les données reçues via une saisie dans l'interface ne sont pas accessibles au serveur sécurisé de vendeur.

12. Procédé selon l'une quelconque des revendications précédentes, dans lequel le serveur sécurisé de vendeur qui fournit l'interface où les détails de la carte de paiement sont saisis ne répond qu'à l'utilisateur qui saisit les détails de paiement, et ne peut pas faire l'objet d'un accès par le personnel qui exploite le serveur sécurisé de vendeur.

13. Système informatique de plateforme de paiement comprenant un serveur de vendeur, un système informatique de paiements de vendeur, un serveur sécurisé de vendeur et un serveur de fournisseur de paiement, dans lequel :
(i) le serveur de vendeur est configuré pour recevoir une demande provenant d'un terminal d'utilisateur pour acheter des biens ou des services pour un montant de transaction ;
(ii) le serveur de vendeur est configuré pour demander, dans une demande de transaction comprenant le montant de la transaction, un premier code de référence à partir du serveur de fournisseur de paiement, et le serveur de vendeur est configuré pour recevoir le premier code de référence provenant du serveur de fournisseur de paiement, dans lequel le serveur de fournisseur de paiement est configuré pour stocker le montant de la transaction en association avec le premier code de référence ;
(iii) le serveur de vendeur est configuré pour envoyer des données de transaction comprenant le montant de la transaction et le premier code de référence au système informatique de paiements de vendeur ;
(iv) le système informatique de paiements de vendeur est configuré pour générer un deuxième code de référence associé de manière unique au premier code de référence, et pour envoyer le deuxième code de référence au serveur sécurisé de vendeur ;
(v) le serveur sécurisé de vendeur est configuré pour fournir une interface au terminal d'utilisateur dans laquelle des détails de paiement peuvent être reçus à partir du terminal d'utilisateur ;
(vi) le serveur sécurisé de vendeur est configuré pour recevoir, via l'interface, les détails de paiement provenant du terminal d'utilisateur, dans lequel les détails de paiement ne sont accessibles à partir d'aucun système informatique en relation avec le serveur sécurisé de vendeur, à l'exception du serveur de fournisseur de paiement ;
(vii) le serveur sécurisé de vendeur est configuré pour transférer les détails de paiement reçus provenant du terminal d'utilisateur au serveur de fournisseur de paiement, et le serveur sécurisé de vendeur est configuré pour envoyer le deuxième code de référence au serveur de fournisseur de paiement ;
(viii) le serveur de fournisseur de paiement est configuré pour générer un troisième code de référence à partir du deuxième code de référence reçu, et le serveur de fournisseur de paiement est configuré pour vérifier que le troisième code de référence est identique au premier code de référence, pour vérifier que la transaction est authentique ;
(ix) le serveur de fournisseur de paiement est configuré pour, en réponse à la détermination que le troisième code de référence est identique au premier code de référence, traiter la demande de paiement, comprenant les détails de paiement reçus et comprenant le montant de la transaction, pour déterminer si la demande de paiement est acceptée ;
(x) le serveur de fournisseur de paiement est configuré pour, en réponse à la détermination que la demande de paiement est acceptée, envoyer une confirmation d'acceptation de la demande de paiement au système informatique de paiements de vendeur ; et/ou le serveur de fournisseur de paiement est configuré pour, en réponse à la détermination que la demande de paiement est refusée, envoyer un refus d'acceptation de la demande de paiement au système informatique de paiements de vendeur.

14. Système informatique de plateforme de paiement selon la revendication 13, comprenant un terminal d'utilisateur de dispositif mobile configuré pour exécuter une application, dans lequel le terminal d'utilisateur est le terminal d'utilisateur de dispositif mobile, dans lequel :
Dans (i) le serveur de vendeur est configuré pour recevoir la demande provenant de l'application s'exécutant sur le terminal d'utilisateur de dispositif mobile pour acheter les biens ou les services pour le montant de la transaction ;
Dans (v) le serveur sécurisé de vendeur est configuré pour fournir l'interface au terminal d'utilisateur de dispositif mobile dans laquelle les détails de paiement peuvent être reçus à partir du terminal d'utilisateur de dispositif mobile ;
Dans (vi) le serveur sécurisé de vendeur est configuré pour recevoir, via l'interface, les détails de paiement provenant de l'application s'exécutant sur le terminal d'utilisateur de dispositif mobile, dans lequel les détails de paiement reçus ne sont accessibles à partir du serveur sécurisé de vendeur par aucun système informatique en relation avec le serveur sécurisé de vendeur, à l'exception du serveur de fournisseur de paiement.

15. Système informatique de plateforme de paiement selon la revendication 13, comprenant un terminal d'utilisateur d'ordinateur configuré pour exécuter une application, dans lequel le terminal d'utilisateur est le terminal d'utilisateur d'ordinateur, dans lequel :
Dans (i) le serveur de vendeur est configuré pour recevoir la demande provenant de l'application s'exécutant sur le terminal d'utilisateur d'ordinateur pour acheter les biens ou les services pour le montant de la transaction ;
Dans (v) le serveur sécurisé de vendeur est configuré pour fournir l'interface au terminal d'utilisateur d'ordinateur dans laquelle les détails de paiement peuvent être reçus à partir du terminal d'utilisateur d'ordinateur ;
dans (vi) le serveur sécurisé de vendeur est configuré pour recevoir, via l'interface, les détails de paiement provenant de l'application s'exécutant sur le terminal d'utilisateur d'ordinateur, dans lequel les détails de paiement reçus ne sont accessibles à partir du serveur sécurisé de vendeur par aucun système informatique en relation avec le serveur sécurisé de vendeur, à l'exception du serveur de fournisseur de paiement.

16. Système selon l'une quelconque des revendications 13 à 15, configuré pour effectuer un procédé selon l'une quelconque des revendications 1 à 12.
